(19) Europäisches Patentamt
European Patent Office
Office européen des brevets

(11) **EP 1 663 620 B1**

(12) **FASCICULE DE BREVET EUROPEEN**

(45) Date de publication et mention
de la délivrance du brevet:
**25.02.2015 Bulletin 2015/09**

(21) Numéro de dépôt: **04787326.0**

(22) Date de dépôt: **08.09.2004**

(51) Int Cl.:
*B29C 63/10* (2006.01)      *F16F 1/366* (2006.01)
*B29C 53/72* (2006.01)      *B29C 53/70* (2006.01)
*B60G 11/14* (2006.01)      *B29B 15/12* (2006.01)
*B29L 31/00* (2006.01)      *B29K 63/00* (2006.01)
*B29K 67/00* (2006.01)      *B29K 307/00* (2006.01)
*B29K 309/08* (2006.01)      *B29C 53/12* (2006.01)
*B29K 105/08* (2006.01)

(86) Numéro de dépôt international:
**PCT/FR2004/002273**

(87) Numéro de publication internationale:
**WO 2005/028189 (31.03.2005 Gazette 2005/13)**

(54) **PROCEDE POUR LA REALISATION D'UN FIL POUR RESSORT**

VERFAHREN ZUR HERSTELLUNG VON FEDERDRAHT

METHOD OF PRODUCING A SPRING WIRE

(84) Etats contractants désignés:
**AT BE BG CH CY CZ DE DK EE ES FI FR GB GR
HU IE IT LI LU MC NL PL PT RO SE SI SK TR**

(30) Priorité: **16.09.2003  FR 0310823**

(43) Date de publication de la demande:
**07.06.2006  Bulletin 2006/23**

(73) Titulaire: **S.ARA Composite
92210 Saint-Cloud (FR)**

(72) Inventeur: **Sardou, Max
77165 Saint-Soupplets (FR)**

(74) Mandataire: **Intès, Didier Gérard André et al
Cabinet Beau de Loménie
158, rue de l'Université
75340 Paris Cedex 07 (FR)**

(56) Documents cités:
**DE-A- 3 037 616      DE-A- 3 320 605
DE-A1- 3 031 582      FR-A- 1 069 192
FR-A- 1 200 649       US-A- 2 887 721
US-A- 4 481 056**

**Description**

La présente invention concerne les fils ayant sensiblement la forme d'un cylindre de révolution pour la réalisation de ressorts avantageusement du type cylindrique en hélice ou analogues, mais aussi de barres de torsion ou analogues qui trouvent des applications dans de nombreux domaines industriels, particulièrement avantageuses pour la réalisation de suspensions pour des véhicules automobiles, camions, véhicules ferroviaires ou analogues.

Il existe des fils ayant sensiblement la forme d'un cylindre de révolution pour la réalisation de ressorts, comportant au moins une première pluralité de couches de fibres enroulées en hélices, ces couches étant situées les unes sur les autres et imprégnées d'une matrice, les fibres étant généralement des fibres de verre et la matrice une résine polymérisable de type époxy, vinylester ou polyester.

Ces fils pour ressort sont très intéressants car ils présentent l'avantage d'un poids par rapport au volume occupé très inférieur à celui des fils métalliques utilisés pour réaliser des ressorts permettant de fournir des efforts élastiques identiques.

Il est déjà connu, notamment par les FR-A-1 200 649 et DE 30 31 582, mais plus particulièrement par le DE 30 37 616 qui décrit une technique la plus proche de celle selon la présente invention, un procédé qui consiste essentiellement à enrouler au moins une couche d'une fibre en hélice autour d'une partie primaire ou âme centrale, avec un liant comme une matrice par exemple une résine, dans un élément en forme d'entonnoir. Cependant, le procédé tel que décrit dans ce document DE 30 37 616 présente des inconvénients, notamment le fait que la matrice ne s'applique pas de façon uniforme sur et entre les spires de fibre et la partie primaire, et le fait que la valeur de l'angle entre la fibre et la partie primaire n'est pas parfaitement déterminée ni de valeur constante. Ces inconvénients ont, notamment, les graves conséquences suivantes : un fil de ressort qui n'est pas lié uniformément et de façon homogène sur toute sa longueur avec l'âme centrale, et, lorsqu'un ressort est réalisé avec un tel fil, les efforts auxquels est soumis ce ressort ne sont pas parfaitement et uniformément transmis dans toute la matière et, de ce fait, le ressort peut avoir une durée de vie très courte suite à des ruptures possibles des fibres.

La présente invention a pour but de mettre en oeuvre un procédé pour réaliser de façon industrielle et particulièrement économique un perfectionnement aux fils du type défini ci-dessus connus de l'art antérieur, pour leur donner un module d'élasticité d'une beaucoup plus grande valeur, et ce, pour une même section de fil, en visant en outre à pallier en grande partie les inconvénients mentionnés ci-dessus des procédés similaires de l'art antérieur.

Plus précisément la présente invention a pour objet un procédé qui est défini dans la revendication 1 du jieu de revendications annexé.

D'autres caractéristiques et avantages de l'invention apparaîtront au cours de la description suivante donnée en regard des dessins annexés à titre illustratif mais nullement limitatif, dans lesquels :

La figure 1 représente le schéma de principe d'une courbe en hélice avec ses principaux paramètres de définition selon les lois mathématiques,
Les figures 2 et 3 représentent deux vues d'un mode de réalisation d'un fil selon l'invention, la figure 2 étant une vue de face en écorché et la figure 3 une vue en coupe transversale schématique, et
La figure 4 représente un mode de réalisation de moyens permettant de mettre en oeuvre le procédé selon l'invention pour la réalisation du fil selon l'invention.

Il est bien précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

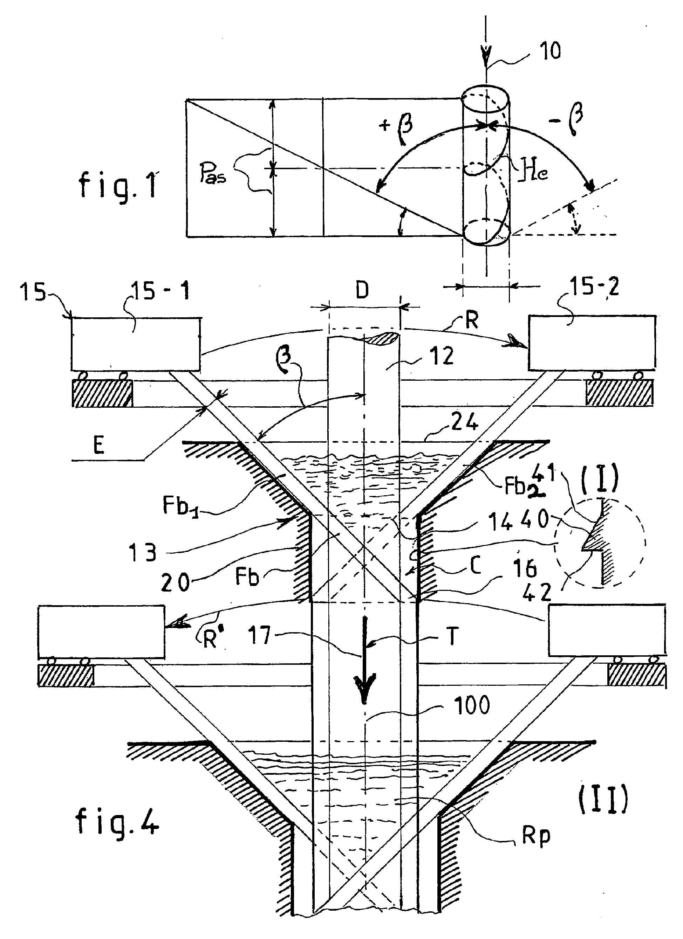

La figure 1 représente un schéma de principe d'une courbe en hélice avec ses principaux paramètres de définition selon les lois mathématiques. Cette courbe est référencée He sur cette figure et ses paramètres de définition, par exemple lé pas de l'hélice Pas, sont connus. Ils sont notamment décrits page 272 du livre intitulé "GUIDE DU DESSINATEUR INDUSTRIEL" de A. CHEVALIER Edition 1984-1985, Librairie HACHETTE TECHNIQUE.

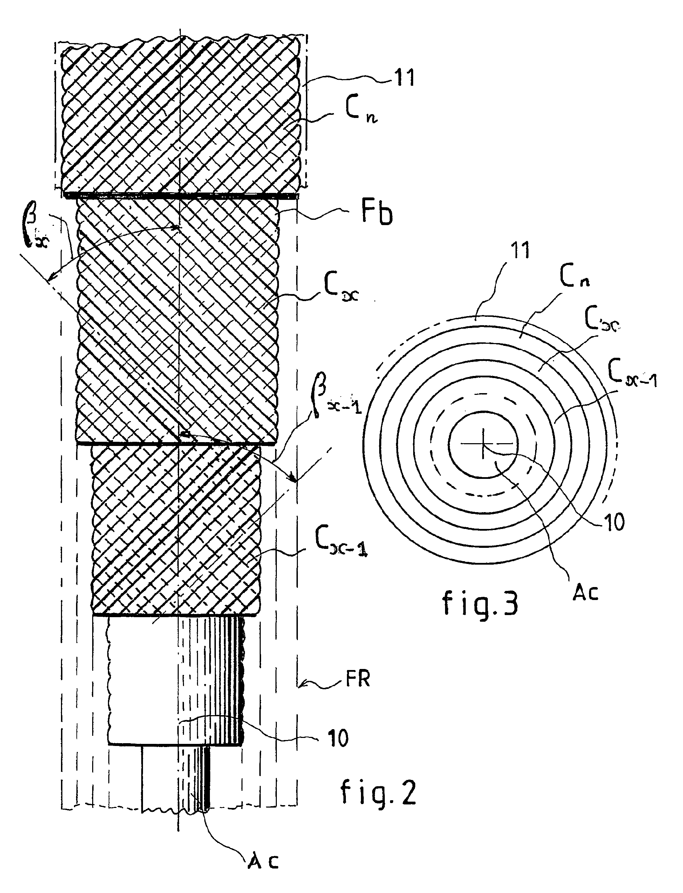

Ceci étant précisé, les figures 2 et 3 représentent un mode de réalisation d'un fil ayant sensiblement la forme d'un cylindre FR avantageusement de révolution, pour la réalisation d'un ressort, par exemple un ressort du type mentionné au préambule. Ce fil comporte au moins une première pluralité de couches $C_{x-1}$, $C_x$, ..., $C_n$ de fibres enroulées Fb, les couches étant situées les unes sur les autres et imprégnées d'une matrice Rp.

Selon une caractéristique importante de l'invention, la première pluralité de couches comporte au moins deux couches $C_{x-1}$, $C_x$ de fibres enroulées en sens inverse l'une de l'autre suivant deux hélices coaxiales autour d'un même axe 10, respectivement à gauche et à droite (en d'autres termes : le signe algébrique de l'angle d'hélice $\beta_x$ est positif pour l'une et négatif pour l'autre).

Les tangentes à ces deux hélices forment, avec l'axe 10, deux angles de valeurs $\beta_{x-1}$ et $\beta_x$ sensiblement égales respectivement à $-(\Delta+k\gamma)$ et $\Delta+k\gamma$, $\gamma$ étant une fonction de la valeur du module d'élasticité pour le ressort à réaliser et k un facteur d'une valeur comprise entre zéro et un. De ce fait, les tangentes aux hélices de deux couches consécutives peuvent faire avec l'axe 10 des angles de valeurs comprises entre $\Delta$ et respectivement $-(\Delta+\gamma)$ et $+(\Delta+\gamma)$, avec toutes les valeurs intermédiaires.

Les fibres Fb peuvent être de différente nature, par exemple des fibres de carbone, de Kevlar (Marque déposée), de Deenema (Marque déposée), de bore, etc. Mais elles seront avantageusement des fibres de verre. Quant à la matrice, elle peut aussi être de différente nature, par exemple en métal ou alliage léger à base d'aluminium, de magnésium, etc, ou en un matériau polymère thermoplastique, thermodurcissable, etc. Cependant, quand les fibres Fb sont des fibres de verre, la matrice est avantageusement une résine polymérisable thermo durcissable, de type époxy, polyester, vinylester, etc, comme celle qui est connue dans le commerce sous la référence Araldite (Marque déposée).

Les caractéristiques essentielles de l'invention décrites ci-dessus permettent d'atteindre les buts de l'invention définis ci-avant.

A titre d'application industrielle avantageuse, pour réaliser un fil pour ressort apte à travailler en compression, la première pluralité de couches comporte un nombre n pair (n > 2) de couches $C_1$, ..., $C_{x-1}$, $C_x$, ..., $C_n$ de fibres Fb situées les unes sur les autres, la couche $C_1$ étant la plus proche de l'axe 10. Les fibres sont enroulées en hélices toutes coaxiales autour de l'axe 10 et les hélices de deux couches consécutives $C_1$, $C_2$ ; ... ; $C_{x-1}$, $C_x$ ; ... ; $C_{n-1}$, $C_n$ sont respectivement à gauche et à droite (angle d'enroulement de signes positif et négatif), les tangentes à ces hélices formant avantageusement avec cet axe 10 des angles de valeurs respectivement égales à, pour la première paire de couches $C_1$, $C_2$ : $-\Delta$ et $\Delta$; pour la deuxième paire de couches $C_3$, $C_4$ : $-(\Delta+2\alpha)$ et $\Delta+2\alpha$; pour la troisième paire de couches $C_5$, $C_6$: $-(\Delta+4\alpha)$ et $\Delta+4\alpha$; et ainsi de suite jusqu'à la $\dfrac{n}{2}$ ième paire de couches $C_{n-1}$, $C_n$ : $-(\Delta+(n-2)\alpha)$ et $\Delta+(n-2)\alpha$, avec $\Delta$ au plus égal sensiblement à 44,6° et $-\alpha$ sensiblement égal à $\dfrac{\gamma}{n-2}$.

Cependant, de façon préférentielle, toujours dans le cas d'un fil pour la réalisation d'un ressort apte à travailler en compression, cette première pluralité de couches comporte n (n ≥ 2) couches $C_1$, ..., $C_n$ de fibres Fb situées les unes sur les autres, la couche $C_1$ étant la plus proche de l'axe 10. Les fibres sont enroulées en hélices toutes coaxiales autour de l'axe, les hélices de deux couches consécutives étant respectivement à gauche et à droite (angle d'enroulement de signes positif et négatif) et les tangentes à ces hélices formant avec cet axe des angles de valeurs respectivement égales à :

$$-\Delta, \ +\Delta+\alpha, \ -(\Delta+2\alpha), \ \Delta+3\alpha, \ -(\Delta+4\alpha), \ \Delta+5\alpha, \ ..., \ -(\Delta+(n-2)\alpha), \ \Delta+(n-1)\alpha$$

avec $\Delta$ au plus égal sensiblement à 44,6° et $-\alpha$ sensiblement égal à $\dfrac{\gamma}{n-1}$.

Dans le cas d'un fil pour la réalisation d'un ressort apte à travailler en traction, la première pluralité de couches comporte un nombre n (n > 2) de couches $C_1$, ..., $C_n$ de fibres Fb situées les unes sur les autres, la couche $C_1$ étant la plus proche de l'axe 10 et les fibres étant enroulées en hélices toutes coaxiales autour de cet axe 10. Les hélices de deux couches consécutives $C_1$, $C_2$ ; ... ; $C_{n-1}$, $C_n$ sont respectivement à gauche et à droite (angle d'enroulement de signes positif et négatif) et les tangentes à ces hélices forment avec l'axe 10 des angles de valeurs respectivement égales avantageusement à, pour la première paire de couches $C_1$, $C_2$ : $\Delta$ et $-\Delta$ ; pour la deuxième paire de couches $C_3$, $C_4$ : $\Delta+2\alpha$ et $-(\Delta+2\alpha)$ ; pour la troisième paire de couches $C_5$, $C_6$ : $\Delta+4\alpha$ et $-(\Delta+4\alpha)$ ; et ainsi de suite jusqu'à la $\dfrac{n}{2}$ ième paire de couches $C_{n-1}$, $C_n$ : $\Delta+(n-2)\alpha$ et $-(\Delta+(n-2)\alpha)$, avec $\Delta$ au plus égal sensiblement à 44,6° et $-\alpha$ sensiblement égal à $\dfrac{\gamma}{n-2}$.

Mais, de façon préférentielle, toujours dans le cas d'un fil pour la réalisation d'un ressort apte à travailler en traction, la première pluralité de couches comporte n (n ≥ 2) couches $C_1$, ..., Cn de fibres Fb situées les unes sur les autres avec la couche $C_1$ la plus proche de l'axe 10. Les fibres sont enroulées en hélices toutes coaxiales autour de cet axe 10, les hélices de deux couches consécutives étant respectivement à gauche et à droite (angle d'enroulement de signes positif et négatif) et les tangentes à ces hélices forment avec cet axe des angles de valeurs respectivement égales à :

$$\Delta, \ -(\Delta+1\alpha), \ \Delta+2\alpha, \ -(\Delta+3\alpha), \ \Delta+4\alpha, \ -(\Delta+5\,\alpha), \ ..., \ \Delta+(n-2)\alpha, \ -(\Delta+(n-1)\alpha)$$

avec $\Delta$ au plus égal sensiblement à 44,6° et $-\alpha$ sensiblement égal à $\dfrac{\gamma}{n-1}$.

Les fils qui comportent une première pluralité de couches de fibres selon les caractéristiques définies ci-dessus donnent les meilleurs résultats recherchés quand cette première pluralité de couches est située en périphérie du cylindre FR, c'est-à-dire quand la couche de rang "n" se trouve la plus proche de la paroi latérale du fil et quand la couche de rang "1" est la plus proche de l'axe 10.

De ce fait, il apparaît que la structure de la partie centrale du fil n'est pas primordiale pour l'obtention d'un fil pour ressort ayant un très bon module élasticité par rapport à sa section. Aussi, dans un souci d'économie, le fil peut comporter, comme illustré sur les figures 2 et 3, une âme centrale Ac. Selon une réalisation possible, cette âme centrale Ac est constituée d'un matériau ayant un module d'élasticité en torsion faible, par exemple un jonc ou tube extrudé en un matériau métallique, thermoplastique ou thermodurcissable, ou de façon préférentielle un matériau viscoélastique permettant de conférer au ressort des propriétés d'amortissement de vibrations, ou bien des matériaux piézo-électriques, ou bien un jonc ou tube comprenant une matrice et des fibres de renforcement formant un angle par rapport à l'axe 10 de valeur inférieure à 44,6°. Préférentiellement, la valeur de cet angle sera égale à zéro degré, les fibres étant alors sensiblement parallèles entre elles et à l'axe 10.

Mais il est aussi possible que cette âme centrale Ac soit constituée d'un matériau ayant un module d'élasticité en torsion faible, comme mentionné ci-dessus, et d'une autre pluralité de couches de fibres situées concentriquement les unes sur les autres à la périphérie de l'âme centrale, les fibres étant préférentiellement enroulées en hélices coaxiales et les tangentes à ces hélices formant avec l'axe des hélices des angles de valeur avantageusement égale ou au plus égale sensiblement à 44,6°, ces fibres étant avantageusement de même nature que mentionnée auparavant.

Il est aussi préférable, sans que cela soit absolument nécessaire, que, dans cette autre pluralité de couches de fibres Fb, le nombre d'hélices à gauche soit sensiblement égal au nombre d'hélices à droite, sans pour autant qu'elles soient obligatoirement alternées à gauche et à droite.

Il est aussi avantageux que la couche située en périphérie du cylindre FR, c'est-à-dire la couche de rang "n", ainsi que les couches la précédant immédiatement, ait une épaisseur plus importante que les autres couches situées vers l'intérieur, de façon à donner aux couches externes une résistance plus grande à la déformation par torsion et éviter par exemple un effet de gonflement du fil lors de sa mise sous effort quand il constitue un ressort, en précisant que cette couche de rang "n" peut être une superposition de plusieurs couches de même épaisseur mais enroulées toutes dans le même sens et selon le même angle $\Delta$ tel que défini ci-dessus.

Sachant que ce fil est destiné à réaliser des ressorts comme mentionné au préambule de la présente description pour la constitution par exemple de suspensions de véhicules automobiles ou analogues, il est aussi préférable que le fil comporte en outre une gaine de protection 11 qui entoure extérieurement, au contact, la dernière couche $C_n$ de la première pluralité de couches de fibres Fb.

Cette gaine peut être constituée d'une couche de matériau élastique, par exemple de silicone, caoutchouc, polyuréthane, d'une façon générique tout matériau thermodurcissable thermoplastique ou vulcanisable. Ce peut être également un matériau composite à base de fibres de Kevlar, de Deenema, de carbone, de verre, de téflon (Marque déposée) etc., déposées en hélices avec un angle de valeur supérieure à 44,6°, de préférence proche de 90°, en précisant que, par matériau composite, on entend un assemblage intime de fibres et de matrice.

Il est précisé que ces fils pour ressort sont avantageusement réalisés à partir de couches de fibres de verre liées entre elles au moyen d'une résine polymérisable qui a l'avantage de se polymériser lentement à faible température. De ce fait, il est possible de réaliser, par exemple, un ressort du type cylindrique en hélice, en enroulant le fil lorsque la résine n'est pas encore polymérisée, sur un moule ou analogue qui a la forme du ressort à obtenir. Cette technique est connue en elle-même et ne sera pas plus amplement décrite ici dans l'unique souci de ne pas compliquer la présente description.

Cependant, selon une réalisation préférentielle notamment avec certains matériaux constituant les fibres Fb, comme la valeur $\Delta$ doit être égale ou tendre à être égale à 44,6° après déformation du fil du ressort sous, par exemple, un couple de torsion, pour obtenir de façon plus certaine ce résultat, il est souhaitable d'enrouler les fibres avec une valeur d'angle dit "de pose" inférieure à 44,6°.

En effet, en sachant qu'un effet de torsion du fil ajoute, par exemple pour environ une dizaine de couches, jusqu'à 2° à l'angle de pose des fibres situées à la périphérie du fil, et uniquement 0,5° pour les fibres situées à proximité de l'axe 10, il est avantageux de choisir, pour les fibres situées en surface du fil, un angle de pose égal à 44,6°-2° et, pour les fibres situées à proximité de l'âme centrale ou de l'axe 10, un angle de pose égal à 44,6°-0,5°.

Le Demandeur a réalisé un tel fil pour ressort avec les matériaux définis ci-dessous, dans lequel la valeur de cet angle de pose diminuait de façon sensiblement continue depuis la première couche interne de rang "1" jusqu'à la couche externe de rang "n", entre 44,5° et 42,1°, avec "n" sensiblement égal à dix.

En fait, quand le fil comporte plusieurs couches, comme ce sera le cas dans la réalité pour la réalisation industrielle de ressorts, la valeur $\Delta$ est plus grande pour la première couche située vers le centre du fil, c'est-à-dire la couche de rang "1" qui est la plus proche de l'axe 10, et pour les premières couches internes suivantes, que pour les couches situées en surface du fil, et elle décroît jusqu'à une valeur limite pour la couche de rang "n" qui se trouve la plus proche de la paroi latérale du fil ou à la périphérie du cylindre FR défini ci-avant. Pour un nombre "n" de couches d'environ dix, la valeur $\Delta$ diminue de façon sensiblement continue entre sensiblement 44,6° et 42° depuis la première couche ($C_1$) au niveau de l'âme centrale jusqu'à la dernière couche ($C_n$) en périphérie.

La présente invention a aussi pour objet un procédé pour réaliser un fil comme ceux qui sont décrits ci-dessus. Une mise en oeuvre possible de ce procédé est illustrée sur la figure 4.

Un mode de mise en oeuvre du procédé selon l'invention est décrit ci-après lorsque le fil doit comporter au moins une couche C d'une fibre enroulée en hélice sur une partie dite "primaire" 12 cylindrique de diamètre égal à D, la tangente à l'hélice faisant avec l'axe 100 de cette partie primaire 12 un angle de valeur $\beta$, la couche C étant en outre apte à être liée à la partie primaire 12 par une matrice Rp, la fibre, une fois enroulée autour de la partie primaire, présentant une section transversale sensiblement rectangulaire ayant une épaisseur E suivant la direction radiale de la partie primaire 12 et une largeur E' suivant la direction perpendiculaire à la tangente à l'hélice.

Il est bien précisé que la partie primaire peut être de tout type, par exemple l'âme centrale Ac définie ci avant.

Le procédé consiste, par référence à la figure 4, à préparer un entonnoir 13 de forme sensiblement tronconique, avantageusement de révolution, d'angle au sommet sensiblement égal à 2$\beta$, cet entonnoir ayant une petite ouverture 14 correspondant à la petite base de la forme tronconique de diamètre égal à D+2E, cette petite ouverture étant avantageusement bordée par un manchon 20 ayant un orifice d'entrée sensiblement de même diamètre que celui de l'ouverture 14 (ou éventuellement d'une valeur très légèrement supérieure).

Il est aussi avantageux que l'orifice de sortie du manchon 20 ait une forme autre qu'un cercle, par exemple soit en forme d'ellipse ou analogue quand il est nécessaire d'obtenir un fil présentant une section en ellipse. Bien entendu, d'autres formes sont possibles, selon la forme souhaitée pour la section du fil.

Il consiste aussi à préparer une réserve 15 pour délivrer la fibre Fb1, par exemple une bobine de fibre de verre dans le cas de la possibilité avantageuse mentionnée précédemment.

Une 16 des extrémités de la fibre est reliée à la partie primaire 12, cette fibre Fb1 pénétrant dans l'entonnoir 13 par sa grande ouverture 24 correspondant à la grande base de la forme tronconique, avant de s'enrouler autour de la partie primaire 12 de façon qu'elle vienne "lécher" la paroi intérieure tronconique de l'entonnoir, comme illustré sur la figure 4.

Le procédé consiste ensuite à animer la réserve 15 d'un mouvement de rotation R à une vitesse de valeur $\omega$ autour de l'axe 100 de la partie primaire 12, cette partie primaire étant en outre translatée 17 dans l'entonnoir 13, par rapport à ce dernier suivant son axe et dans le sens de sa grande ouverture 24 vers sa petite ouverture 14.

De plus, la valeur $\omega$ de la vitesse de rotation de la réserve 15 est une fonction de la valeur T de la vitesse de translation de la partie primaire 12.

Selon une réalisation possible qui donne des résultats intéressants, la valeur $\omega$ exprimée en tours par seconde et la valeur T exprimée en mètres par seconde sont liées par la relation suivante :

$$\omega = \frac{T}{D\pi[tg(\frac{\pi}{2} - \beta)]}$$

Le mode de mise en oeuvre du procédé décrit ci-dessus est limité à la réalisation d'une couche C ne comportant qu'une seule hélice. Mais, pour obtenir des fils résistants et ayant un module d'élasticité qui les rendent aptes à être utilisés pour la réalisation de ressorts comme mentionné auparavant, il est bien évident que la couche C comportera un nombre fini d'hélices situées au contact les unes à côté des autres et enroulées sur la même partie primaire 12, pour obtenir une couche C la plus pleine possible, comme pour la réalisation du fil pour ressort illustré sur la figure 2.

Dans ce cas, le procédé consiste à préparer X réserves 15-1, 15-2, ... , chacune d'une ou plusieurs fibres, une extrémité de chaque fibre étant reliée à la partie primaire 12, les X fibres pénétrant dans l'entonnoir 13 par sa grande ouverture 24, à animer les réserves d'un mouvement de rotation R à la même vitesse de rotation de valeur $\omega$ autour de l'axe 100 de la partie primaire, tout en translatant à la vitesse de valeur T la partie primaire 12 vers la petite ouverture de l'entonnoir, le nombre X de ces réserves étant égal à :

$$X = \pi . \frac{D}{E'} . \sin \left( \frac{\pi}{2} - \beta \right)$$

Comme mentionné ci-dessus, au fur et à mesure que la fibre s'enroule en hélice autour de la partie primaire 12, la partie primaire portant la fibre enroulée se translate à la vitesse T.

Il est possible que cette translation soit choisie selon l'un des deux modes suivants : translation en continu, translation pas à pas.

La translation en continu est envisageable, mais il est bien évident qu'elle ne peut être obtenue qu'en exerçant une traction continue sur l'extrémité émergeante de la partie primaire avec la fibre enroulée. Cette technique peut présenter deux inconvénients qui peuvent dans certains cas être gênants, à savoir le fait que la partie primaire avec la fibre enroulée s'étire de façon involontaire et que, lors de cet étirement, même s'il s'annule à la fin de la traction, il se produise un essorage de cette partie primaire avec la fibre enroulée, au risque d'entraîner des modifications de la valeur de l'angle de pose des fibres, une perte de résine polymérisable, et de nuire ainsi à la bonne réalisation du fil.

Aussi, est-il avantageux, dans certains cas, d'imprimer à la partie primaire avec la fibre enroulée un mouvement de translation pas à pas.

Cette translation pas à pas est obtenue par exemple en appliquant un mouvement oscillant à l'entonnoir 13 suivant son axe, la petite ouverture 14 présentant une forme de manchon 20 sensiblement cylindrique comportant une denture d'engrenage sur la surface de sa paroi intérieure, de préférence une micro-denture.

Cette denture d'engrenage est constituée par exemple par une ou plusieurs rangées de dentures en forme dent de scie 40, chaque dent de scie, représentée en "loupe" sur la figure 4, ayant un flanc 41 à pente faible du côté amont, l'autre flanc 42 du côté aval étant préférentiellement perpendiculaire à l'axe de l'entonnoir 13, ces dents de scie étant en outre réparties de façon continue ou discontinue sur la paroi intérieure du manchon 20, disposées soit parallèles entre elles soit suivant une ou des hélices de même pas que les hélices que forment les fibres Fb.

Ces micros dentures peuvent être continues ou discrètes et être réalisées à partir de gravures ou stries prises dans le matériau garnissant l'alésage du manchon 20. Elles peuvent également être constituées de poils ou écailles couchés vers la sortie d'axe, parallèles à l'axe du manchon 20 ou préférentiellement perpendiculaires aux hélices que forment les fibres Fb ou les micro reliefs de la dernière couche de surface du fil. De façon préférentielle, les dentures sont de la même échelle que les microreliefs de surface que forment les fibres Fb ou microreliefs de la dernière couche de surface du fil.

Avec cette réalisation de denture, en donnant à l'entonnoir des micros oscillations suivant son axe, on obtient une translation pas à pas de la partie primaire 12 avec la fibre Fb enroulée. En effet, celles-ci « sautent » d'une micro dent à la micro dent immédiatement suivante le long de l'alésage du manchon 20. Si l'amplitude des oscillations est faible, typiquement du pas du micro relief, la translation peut être considérée comme une translation continue de vitesse moyenne T et il est alors possible d'animer la ou les réserves 15 d'un mouvement de rotation R à une vitesse de valeur $\omega$ continue telle que définie ci-dessus.

Il a été décrit ci-dessus un exemple de mise en oeuvre du procédé selon l'invention pour la réalisation d'une couche C sur une partie primaire 12 comportant une ou plusieurs fibres enroulées en hélices, ces hélices étant toutes enroulées dans le même sens.

Cependant, comme mentionné précédemment, le fil pour ressort comporte avantageusement une pluralité de couches de fibres enroulées en hélices alternativement en sens contraires les unes par rapport aux autres.

La partie I de la figure 4 illustre la réalisation d'une première couche de fibres enroulées en hélices sur la partie primaire 12 dans le sens indiqué par la flèche R. La partie II de la même figure illustre la réalisation d'une seconde couche de fibres enroulées en hélices sur la première couche dans le sens opposé indiqué par la flèche R'. La partie primaire pour la réalisation de la seconde couche est alors constituée par la partie primaire 12 pour la réalisation de la première couche et cette première couche.

La figure 4 représente dans son ensemble la réalisation de deux couches de fibres enroulées en hélices en sens opposés, qui nécessite deux entonnoirs différents.

Selon un autre mode de mise en oeuvre du procédé, il est possible de réaliser au moins deux couches de fibres enroulées en hélices en sens opposés l'une sur l'autre, en n'utilisant qu'un seul entonnoir.

Aussi, pour un fil qui doit comporter n couches C de fibres Fb ayant chacune une épaisseur E et étant enroulées en n hélices l'une sur l'autre de façon coaxiale, respectivement à gauche et à droite sur une partie dite "primaire" 12 cylindrique de diamètre égal à D, les tangentes aux n hélices faisant avec l'axe 100 de la partie primaire des angles de valeurs respectives $\beta_1$, $\beta_2$, ... $\beta_n$ progressives entre $-\Delta-\gamma$ et $\Delta+\gamma$, les n couches C étant en outre aptes à être liées entre elles et à la partie primaire 12 par une matrice Rp, le procédé selon l'invention consiste à préparer un entonnoir 13 de forme tronconique d'angle au sommet égal à $2(\Delta+\gamma)$, cet entonnoir ayant une petite ouverture 14 correspondant à la petite base de la forme tronconique de diamètre égal à D+2nE, à préparer n réserves 15 de fibres, à relier une 16 des extrémités des n fibres à la partie primaire 12, les n fibres pénétrant dans l'entonnoir 13 par sa grande ouverture 24 correspondant à la grande base de la forme tronconique, et à animer les n réserves 15 d'un mouvement de rotation en sens inverse les unes des autres à des vitesses de rotation de valeurs respectives $\omega_1$, $\omega_2$, ..., $\omega_n$ autour de l'axe 100 de la partie primaire 12, la partie primaire étant translatée 17 dans l'entonnoir 13 suivant son axe dans le sens de sa grande ouverture 24 vers sa petite ouverture 14, les valeurs $\omega_1$, $\omega_2$, ..., $\omega_n$ des vitesses de rotation respectives des n réserves 15 étant fonctions de la valeur T de la vitesse de translation de la partie primaire et de l'angle de pose $\beta$ local visé.

Comme mentionné précédemment, les fibres doivent être liées à la partie primaire 12 et entre elles au moyen d'une matrice liquide telle que de la résine polymérisable si les fibres sont des fibres de verre. Il est donc souhaitable de mouiller avec cette matrice la partie primaire 12 et les fibres elles-mêmes avant de les enrouler en hélices. On peut imprégner chaque fibre par tout procédé connu de l'homme de l'art, notamment en amont de la convergence dans le ou les entonnoirs.

De façon préférentielle, le procédé consiste en outre à remplir l'entonnoir 13 d'une matrice liquide Rp préalablement à la mise en rotation d'au moins une réserve 15 et à la translation de la partie primaire 12.

Il est avantageux de positionner le ou les entonnoirs 13 de façon que leurs axes soient verticaux et coaxiaux. Dans ce cas, la matrice demeure parfaitement contenue dans l'entonnoir puisque la petite ouverture 14 a une section égale à la section totale de la partie primaire recouverte de couches de fibres. En conséquence, la matrice ne coule pas par l'ouverture 14, même en cas d'arrêt de production, mais n'est entraînée que par les déplacements de la partie primaire 12 et des fibres s'enroulant sur elle, tout en les imprégnant parfaitement pour assurer une bonne liaison entre elles. En léchant la paroi intérieure de l'entonnoir comme indiqué plus haut, les fibres assurent son curage et évitent la formation d'une couche de résine « morte » qui risquerait de polymériser et donc d'encrasser la paroi de l'entonnoir.

Il est avantageux de travailler à une température relativement faible, typiquement de l'ordre de 10°C, pour bénéficier des meilleures propriétés de mise en oeuvre de la matrice.

Il est enfin à noter que, lorsque l'entraînement se fait en final sur la gaine de protection 11 quand elle est constituée de fibres et de matrice comme mentionné ci-dessus, l'alésage du manchon 20 peut dans ce cas présenter une surface semblable au produit connu sous la marque "VELCRO" ou analogue.

**Revendications**

1. Procédé pour réaliser un fil pour ressort comportant au moins une couche (C) d'une fibre enroulée en hélice sur une partie dite "primaire" (12) cylindrique de révolution de diamètre égal à D, la tangente à ladite hélice faisant avec l'axe (100) de la partie primaire (12) un angle de valeur $\beta$, ladite couche (C) étant en outre apte à être liée à la partie primaire (12) par une matrice (Rp), la fibre, une fois enroulée autour de la partie primaire, présentant une section transversale sensiblement rectangulaire ayant une épaisseur E suivant la direction radiale de la partie primaire (12) et une largeur E' suivant la direction perpendiculaire à la tangente à l'hélice, le procédé consistant à préparer un entonnoir (13) de forme tronconique, ledit entonnoir ayant une petite ouverture (14) correspondant à la petite base de la forme tronconique, à préparer une réserve (15) pour délivrer la fibre (Fb1), à relier une (16) des extrémités de ladite fibre à la partie primaire (12), et à animer ladite réserve (15) d'un mouvement de rotation (R) à une vitesse de valeur $\omega$ autour de l'axe (100) de ladite partie primaire (12), ladite partie primaire étant translatée (17) à une vitesse T dans l'entonnoir (13) suivant son axe dans le sens de sa grande ouverture (24) vers sa petite ouverture (14), **caractérisé par le fait qu'**il consiste en outre à faire pénétrer ladite fibre (Fb1) dans l'entonnoir (13) par sa grande ouverture (24) correspondant à la grande base de la forme tronconique avant de s'enrouler autour de la partie primaire de façon qu'elle vienne lécher la paroi intérieure tronconique de l'entonnoir, la valeur de l'angle au sommet dudit entonnoir (13) étant sensiblement égal à $2\beta$, la petite base de la forme tronconique dudit entonnoir ayant un diamètre égal à D + 2E, la valeur $\omega$ de la vitesse de rotation de la réserve (15) exprimé en tours par seconde et la valeur T de la vitesse de translation de la partie primaire (12) exprimée en mètres par seconde étant liées par la relation suivante :

$$\omega = \frac{T}{D\pi[tg(\frac{\pi}{2} - \beta)]}$$

2. Procédé selon la revendication 1, **caractérisé par le fait qu'**il consiste à préparer X réserves (15-1, 15-2, ...), chacune d'une fibre, une extrémité de chaque fibre étant reliée à la partie primaire (12), les X fibres pénétrant dans l'entonnoir (13) par sa grande ouverture (24), et à animer lesdites réserves d'un mouvement de rotation (R) à la même vitesse de rotation de valeur ω autour de l'axe (100) de la partie primaire, tout en translatant à la vitesse de valeur T ladite partie primaire (12) vers la petite ouverture de l'entonnoir, le nombre X de ces réserves étant égal à :

$$X = \pi.\frac{D}{E'}.\sin\left(\frac{\pi}{2} - \beta\right)$$

**3.** Procédé selon l'une des revendications 1 et 2, **caractérisé par le fait que** ladite translation est choisie selon l'un des deux modes suivants : translation en continu, translation pas à pas.

**4.** Procédé selon la revendication 3, **caractérisé par le fait que** la translation pas à pas est obtenue en appliquant un mouvement oscillant au dit entonnoir (13) suivant son axe de révolution, la petite ouverture (14) présentant une forme sensiblement cylindrique de révolution et comportant une denture d'engrenage sur la surface de sa paroi intérieure.

**5.** Procédé selon l'une des revendications 1 à 4 pour réaliser un fil pour ressort, le fil comportant n couches (C) de fibres (Fb) ayant chacune une épaisseur E et étant enroulées en n hélices l'une sur l'autre de façon coaxiale, respectivement à gauche et à droite, sur une partie dite "primaire" (12) cylindrique de révolution de diamètre égal à D, les tangentes aux n dites hélices faisant avec l'axe (100) de la partie primaire des angles de valeurs respectives $\beta_1$, $\beta_2$, ..., $\beta_n$ progressives entre $\Delta-\gamma$ et $\Delta+\gamma$, lesdites n couches (C) étant en outre aptes à être liées entre elles et à la partie primaire (12) par une matrice (Rp),
**caractérisé par le fait qu'**il consiste :

- à préparer un entonnoir (13) de forme tronconique de révolution d'angle au sommet sensiblement égal à $2(\Delta+\gamma)$, ledit entonnoir ayant une petite ouverture (14) correspondant à la petite base de la forme tronconique de diamètre égal à D+2nE,
- à préparer n réserves (15) de fibres,
- à relier une (16) des extrémités des n fibres à la partie primaire (12), ces n fibres pénétrant dans l'entonnoir (13) par sa grande ouverture (24) correspondant à la grande base de la forme tronconique, et
- à animer les n réserves (15) d'un mouvement de rotation (R) en sens inverses les unes des autres à des vitesses de rotation de valeurs respectives $\omega_1$, $\omega_2$, ..., $\omega_n$ autour de l'axe (100) de la partie primaire (12), ladite partie primaire étant translatée (17) dans l'entonnoir (13) suivant son axe de révolution dans le sens de sa grande ouverture (24) vers sa petite ouverture (14), les valeurs $\omega_1$, $\omega_2$, ..., $\omega_n$ des vitesses de rotation respectives des n réserves (15) étant fonction de la valeur T de la vitesse de translation de la partie primaire.

**6.** Procédé selon l'une des revendications 1 à 5, **caractérisé par le fait qu'**il consiste en outre à remplir ledit entonnoir (13) d'une matrice liquide (Rp) préalablement à la mise en rotation d'au moins une réserve (15) et à la translation de la partie primaire (12).

**7.** Procédé selon l'une des revendications 5 et 6, **caractérisé par le fait qu'**il consiste à border la petite ouverture (14) de l'entonnoir (13) par un manchon (20) ayant un orifice d'entrée sensiblement de même diamètre que celui de ladite petite ouverture et un orifice de sortie (20) d'une forme adaptée à celle de la section souhaitée pour le fil.

**Patentansprüche**

**1.** Verfahren zur Herstellung von Federdraht, umfassend mindestens eine Schicht (C) aus einer spiralförmig gewickelten Faser auf einem so genannten "primären" zylindrischen Umdrehungsteil (12) mit einem Durchmesser gleich D, wobei die Tangente an die Spirale mit der Achse (100) des primären Teils (12) einen Winkel mit dem Wert β bildet, wobei die Schicht (C) ferner geeignet ist, mit dem primären Teil (12) durch eine Matrix (Rp) verbunden zu werden, wobei die Faser, wenn sie um den primären Teil gewickelt ist, einen im Wesentlichen rechteckigen Querschnitt mit einer Dicke E in Radialrichtung des primären Teils (12) und einer Breite E# in die Richtung senkrecht auf die Tangente an die Spirale aufweist, wobei das Verfahren darin besteht, einen Trichter (13) von kegelstumpfartiger Form vorzubereiten, wobei der Trichter eine kleine Öffnung (14) entsprechend der kleinen Basis der kegelstumpfartigen Form hat, eine Reserve (15) zum Liefern der Faser (Fb1) vorzubereiten, eines (16) der Enden der Faser mit dem primären Teil (12) zu verbinden und die Reserve (15) einer Drehbewegung (R) mit einer Geschwindigkeit mit dem Wert ώ um die Achse (100) des primären Teils (12) zu unterziehen, wobei der primäre Teil mit einer Geschwindigkeit T in dem Trichter (13) entlang seiner Achse in die Richtung von seiner großen Öffnung (24) zu seiner kleinen Öffnung (14) in Translation verschoben wird (17), **dadurch gekennzeichnet, dass** es ferner darin besteht, die Faser (Fb1) in den Trichter (13) durch seine große Öffnung (24) entsprechend der großen Basis der kegelstumpfartigen Form eindringen zu lassen, bevor sie sich um den primären Teil wickelt, so dass sie an der kegelstumpfartigen Innenwand des Trichters streift, wobei der Wert des Winkels an der Spitze des Trichters (13) im Wesentlichen gleich $2\beta$ ist, wobei die kleine Basis der kegelstumpfartigen Form des Trichters einen Durchmesser gleich D + 2E hat, wobei der Wert $\dot{\omega}$ der Drehgeschwindigkeit der Reserve (15), ausgedrückt in Umdrehungen pro Sekunde, und der Wert T der Translationsgeschwindigkeit des primären Teils (12), ausgedrückt in Metern pro Sekunde, durch folgendes Verhältnis verbunden sind:

$$\omega = \frac{T}{D\pi[tg(\frac{\pi}{2} - \beta)]}$$

2. Verfahren nach Anspruch 1, **dadurch gekennzeichnet, dass** es darin besteht, X Reserven (15-1, 15-2, ...) jeweils einer Faser vorzubereiten, wobei ein Ende jeder Faser mit dem primären Teil (12) verbunden ist, wobei die X Fasern in den Trichter (13) durch seine große Öffnung (24) eindringen, und die Reserven einer Drehbewegung (R) mit derselben Drehgeschwindigkeit mit dem Wert w um die Achse (100) des primären Teils zu unterziehen, wobei der primäre Teil (12) mit der Geschwindigkeit mit dem Wert T zu der kleinen Öffnung des Trichters in Translation verschoben wird, wobei die Anzahl X dieser Reserven gleich ist:

$$X = \pi . \frac{D}{E'} . \sin\left(\frac{\pi}{2} - \beta\right)$$

3. Verfahren nach einem der Ansprüche 1 und 2, **dadurch gekennzeichnet, dass** die Translation nach einem der folgenden Modi gewählt wird: kontinuierliche Translation, schrittweise Translation.

4. Verfahren nach Anspruch 3, **dadurch gekennzeichnet, dass** die schrittweise Translation erhalten wird, indem an den Trichter (13) eine Oszillationsbewegung entlang seiner Umdrehungsachse angelegt wird, wobei die kleine Öffnung (14) eine im Wesentlichen zylindrische Umdrehungsform aufweist und eine Eingriffsverzahnung auf der Fläche ihrer Innenwand umfasst.

5. Verfahren nach einem der Ansprüche 1 bis 4 zur Herstellung von Federdraht, wobei der Draht n Schichten (C) von Fasern (Fb) umfasst, die jeweils eine Dicke E haben und in n Spiralen koaxial links bzw. rechts übereinander auf einen so genannten "primären" zylindrischen Umdrehungsteil (12) mit einem Durchmesser gleich D gewickelt sind, wobei die Tangenten an die n Spiralen mit der Achse (100) des primären Teils Winkel mit jeweiligen Werten $\beta_1$, $\beta_2$, ... $\beta_n$, die zwischen $\Delta-\gamma$ und $\Delta+\gamma$ progressiv sind, bilden, wobei die n Schichten (C) ferner geeignet sind, miteinander und mit dem primären Teil (12) durch eine Matrix (Rp) verbunden zu werden,
**dadurch gekennzeichnet, dass** es darin besteht:

- einen Trichter (13) mit einer kegelstumpfartigen Umdrehungsform mit einem Winkel an der Spitze im Wesentlichen gleich $2(\Delta+\gamma)$ vorzubereiten, wobei der Trichter eine kleine Öffnung (14) hat, die der kleinen Basis der kegelstumpfartigen Form mit einem Durchmesser gleich D+2nE entspricht,
- n Reserven (15) von Fasern vorzubereiten,
- eines (16) der Enden der n Fasern mit dem primären Teil (12) zu verbinden, wobei diese n Fasern in den Trichter (13) durch seine große Öffnung (24) entsprechend der großen Basis der kegelstumpfartigen Form eindringen, und
- die n Reserven (15) einer Drehbewegung (R) in zueinander entgegengesetzte Richtungen mit Drehgeschwindigkeiten mit jeweiligen Werten $\dot{\omega}_1$, $\dot{\omega}_2$, ... $\dot{\omega}_n$ um die Achse (100) des primären Teils (12) zu unterziehen, wobei der primäre Teil in dem Trichter (13) entlang seiner Umdrehungsachse in die Richtung von seiner großen Öffnung (24) zu seiner kleinen Öffnung (14) in Translation verschoben wird (17), wobei die Werte $\dot{\omega}_1$, $\dot{\omega}_2$, ... $\dot{\omega}_n$ der jeweiligen Drehgeschwindigkeiten der n Reserven (15) vom Wert T der Translationsgeschwindigkeit des primären Teils abhängen.

6. Verfahren nach einem der Ansprüche 1 bis 5, **dadurch gekennzeichnet, dass** es ferner darin besteht, den Trichter (13) mit einer flüssigen Matrix (Rp) vor dem Versetzen mindestens einer Reserve (15) in Drehung und vor der Translation des primären Teils (12) zu füllen.

7. Verfahren nach einem der Ansprüche 5 und 6, **dadurch gekennzeichnet, dass** es darin besteht, die kleine Öffnung (14) des Trichters (13) mit einer Hülse (20) zu versehen, die eine Eingangsöffnung mit im Wesentlichen demselben Durchmesser wie jener der kleinen Öffnung und eine Ausgangsöffnung (20) mit einer an jene des für den Draht gewünschten Querschnitts angepassten Form aufweist.

**Claims**

1. A method of making a spring wire comprising at least one layer (C) of a fiber wound helically on a cylindrical "primary" portion (12) of revolution of diameter equal to D, the tangent to said helix making an angle relative to the axis (100) of the primary portion (12) having a value β, said layer (C) also being suitable for being bonded to the primary portion (12) by a matrix (Rp), the fiber, once wound around the primary portion, presenting a cross-section that is substantially rectangular, of thickness E in the radial direction of the primary portion (12) and of width E' in the direction perpendicular to the tangent to the helix, the method consisting in preparing a funnel (13) of frustoconical shape, said funnel having a small opening (14) corresponding to the small base of the frustoconical shape, in preparing a supply (15) to deliver the fiber (Fb1), in connecting one of the ends (16) of said fiber to the primary portion (12), and in imparting rotary movement (R) to said supply (15) at a speed ω about the axis (100) of said primary portion (12), said primary portion being moved in translation (17) at a speed T through the funnel (13) along its axis going from its large opening (24) towards its small opening (14), the method being **characterized by** the fact that it further consists in causing said fiber (Fb1) to penetrate into the funnel (13) via its large opening corresponding to the large base of the frustoconical shape before being rolled up around the primary portion so that it comes to lick the frustoconical interior wall of the funnel, the angle at the apex of said funnel (13) having a value that is substantially equal to 2β, the small base of the frustoconical shape of said funnel having a diameter equal to D+2E, the value ω of the speed in rotation of the supply (15) expressed in revolutions per second, and the value T of the speed in translation of the primary portion (12) expressed in meters per second being associated by the following relationship:

$$\omega = \frac{T}{D\pi[tg(\frac{\pi}{2} - \beta)]}$$

2. A method according to claim 1, **characterized by** the fact that it consists in preparing X supplies (15-1, 15-2, ...) each of one fiber, one end of each fiber being connected to the primary portion (12), the X fibers penetrating into the funnel (13) via its large opening (24), and in driving said supplies in rotary movement (R) at the same speed of rotation of value ω about the axis (100) of the primary portion, while causing said primary portion (12) to move in translation at the speed of value T towards said small opening of the funnel, the number X of said supplies being equal to:

$$X = \pi.\frac{D}{E'}.\sin(\frac{\pi}{2} - \beta)$$

3. A method according to one of claims 1 to 2, **characterized by** the fact that said movement in translation is selected from one of the following two kinds of movement: continuous translation, stepwise translation.

4. A method according to claim 3, **characterized by** the fact that stepwise translation is obtained by applying oscillating motion to said funnel (13) along its axis, the small opening (14) presenting a shape that is substantially cylindrical of revolution and including biting teeth on the surface of its inside wall.

5. A method according to one of claims 1 to 4 for making a spring wire, the wire comprising n layers (C) of fibers (Fb) each having a thickness E and being wound in n helices on one another in coaxial manner, respectively in left-handed and in right-handed helices on a cylindrical "primary" portion (12) of revolution of diameter equal to D, the tangents to said n helices making angles relative to the axis (100) of the primary portion having respective values $\beta_1$, $\beta_2$, ... , $\beta_n$ progressing from $\Delta-\gamma$ and $\Delta+\gamma$, said n layers (C) also being suitable for being bonded to one another and to the primary portion (12) by a matrix (Rp),
the method being **characterized by** the fact that it consists:

   - in preparing a funnel (13) of frustoconical shape of revolution having an angle at the apex substantially equal to $2(\Delta+\gamma)$, said funnel having a small opening (14) corresponding to the small base of the frustoconical shape of diameter equal to D+2nE;
   - in preparing n supplies (15) of fibers;
   - in connecting one (16) of the ends of each of the n fibers to the primary portion (12), said n fibers penetrating into the funnel (13) via its large opening (24) corresponding to the large base of the frustoconical shape; and
   - in driving the n supplies (15) in rotary movement (R) and in directions opposite to one another at respective speeds of rotation of values $\omega_1$, $\omega_2$, ... , $\omega_n$ about the axis (100) of the primary portion (12), said primary portion being moved in translation (17) through the funnel (13) along its axis going from its large opening (24) towards its small opening (14), the values $\omega_1$, $\omega_2$, ... , $\omega_n$ of the respective speeds of rotation of the n supplies (15) being functions of the value T of the speed in translation of the primary portion.

6. A method according to one of claims 1 to 5, **characterized by** the fact that it further consists in filling said funnel (13) in a liquid matrix (Rp) prior to setting at least one supply (15) in rotation and to setting the primary portion (12) into translation.

7. A method according to one of claims 5 to 6, **characterized by** the fact that it consists in surrounding said small opening (14) of the funnel (13) with a sleeve (20) having an inlet orifice of substantially the same diameter as said small opening, and an outlet orifice (20) of a shape adapted to the shape of the section desired for the wire.

fig.1

fig.4

$\beta_x$

11

$C_n$

Fb

$C_x$

$\beta_{x-1}$

$C_{x-1}$

FR

10

fig. 2

Ac

11

$C_n$

$C_x$

$C_{x-1}$

10

Ac

fig. 3

**EP 1 663 620 B1**